# EUROPÄISCHE PATENTSCHRIFT

(11) **EP 2 705 307 B1**
(45) Veröffentlichungstag und Bekanntmachung des Hinweises auf die Patenterteilung: **15.01.2020**
(21) Anmeldenummer: 12720078.0
(22) Anmeldetag: 01.05.2012
(51) Int. Cl.: F24D 3/16, E04C 2/52, E04B 2/88, F24D 3/14, E04B 9/00, F24F 5/00

(54) **BAUSTRUKTUR UMFASSEND EINEN RAUMBEGRENZUNGSAUFBAU UND VERFAHREN ZUM HERSTELLEN DERSELBEN**
BUILDING STRUCTURE COMPRISING A SPACE DEMARCATION ASSEMBLY AND METHOD FOR PRODUCING SAME
STRUCTURE DE CONSTRUCTION COMPRENANT UN CONSTRUCTION DE DÉLIMITATION D'ESPACE ET SON PROCÉDÉ DE FABRICATION

(30) Priorität: 04.05.2011 CH 763112011
(43) Veröffentlichungstag der Anmeldung: 12.03.2014
(73) Patentinhaber: HDS Technology AG, 8703 Erlenbach (CH)
(72) Erfinder: SULZER, Hans Dietrich, CH-8703 Erlenbach (CH); SULZER, Eric, CH-8006 Zürich (CH)
(74) Vertreter: Kaminski Harmann Patentanwälte AG (Schweiz)
(86) Internationale Anmeldenummer: PCT/CH2012/000095
(87) Internationale Veröffentlichungsnummer: WO 2012/149659

(56) Entgegenhaltungen:
- EP-A1- 2 306 135
- WO-A1-01/59371
- CH-A- 313 931
- DE-A1- 3 919 862
- DE-A1-102005 012 754
- DE-C- 972 926
- DE-U1-202007 017 185
- US-B1- 7 051 489

## Beschreibung

Die Erfindung bezieht sich auf einen Raumbegrenzungsaufbau nach dem Oberbegriff des Anspruches 1 und ein Verfahren zum Herstellen desselben nach dem Oberbegriff des Anspruches 11.

In und an Wänden oder Decken von Räumen, die lediglich eine kleine Kühl- oder Heizleistung benötigen, werden Leitungssysteme bzw. Kühl- oder auch Heizelemente damit angebracht. Im Betriebszustand wird ein Heiz- oder Kühlmedium, vorzugsweise eine Flüssigkeit, gegebenenfalls aber auch ein Gas durch das Leitungssystem gefördert. Da die Kühl- bzw. Heizleistung solcher Elemente häufig relativ klein ist, können die Leitungssysteme hinter einer Sichtfläche angeordnet werden.

Bei herunter gehängten Decken gemäss CH 313931 und DE 202007017185 U1 sind Kühl- oder Heizregister bzw. Leitungen, die von einem Eintritts-Anschluss zu einem Auslass-Anschluss führen, an den Deckenelementen angeordnet, so dass sie auf der vom Raum abgewandten Seite der Deckenelemente liegen. Die dem Raum zugewandte Seite der Deckenelemente kann entsprechend der herrschenden Temperaturverteilungen Wärme abstrahlen oder Wärmestrahlung aufnehmen. Das Montieren und/oder Anschliessen der Leitungen ist sehr aufwändig. US 7 051 489 B1 beschreibt Platten für heruntergehängte Decken, die zum Auflegen auf T-förmige Träger elastisch gebogen werden können und ein dem Raum zugewandtes zusammenhängendes Flachmaterial sowie eine damit verbundene, Stabilität gebende dreidimensionale Schicht umfassen. Das Dokument CH313931 zeigt den Oberbegriff der Ansprüche 1 bzw. 10.

Nebst den Leitungssystemen auf den herunter gehängten Decken sind auch Gipsdecken bekannt, in welche Leitungssysteme eingelegt sind. Dazu werden beispielsweise mit Gips beschichtete Kartonplatten an der Decke oder an einer von der Decke herunter hängenden Struktur befestigt. An der Gipsoberfläche wird ein Leitungssystem festgeklebt und anschliessend wird soviel Gips aufgetragen, dass das Leitungssystem überdeckt ist. Leitungssysteme können auch an Wänden festgeklebt und anschliessend mit einer Putzschicht überdeckt werden. Um das Leitungssystem zu überdecken, muss Gips aufgetragen werden, was mit einem entsprechenden Aufwand verbunden ist.

Platten mit einer in einen Kanal eingelegten Leitung können als fertige Elemente montiert werden, so dass zumindest das Aufkleben der Leitungen und das Auftragen einer die Leitungen überdeckenden Putzschicht wegfällt. Dort, wo ein solches Wärmetauscher-Element montiert wird, muss eine Anschlussmöglichkeit mit einer Zu- und einer Ableitung vorhanden sein. Die Leitungen des Elementes werden über Verbindungsstücke, beispielsweise Klemmhülsen, mit den Anschlussleitungen verbunden. Danach wird der Bereich mit dem Anschlussleitungen bzw. Verbindungen durch eine Abdeckung verschlossen. Diese Platten mit auf der Rückseite eingelegten Leitungen haben verschiedene Nachteile, so können sie beispielsweise nur kleine Wand- oder gegebenenfalls auch Deckenbereiche belegen. Zudem handelt es sich um Spezialanfertigungen, deren Grössen an die jeweiligen Verhältnisse angepasst werden müssen. Die Wärm- bzw. Kühlleistung muss durch die massive Platte erzielt werden, was mit einer Reduktion der Effizienz verbunden ist. Diese reduzierte Effizienz führt zu einem reduzierten Wärmefluss zwischen Innenraum und Wärmetauscher-Leitungen, der zudem noch konkurrenziert wird vom unerwünscht hohen Wärmefluss durch die Wand.

Aus der DE 196 36 944 ist eine Lösung in Sandwichbauweise bekannt, bei der Kühlrohrregister zwischen zwei Trockenbauplatten eingelegt sind. Diese Elemente werden zum Bereitstellen einer Kühldecke rasterartig nebeneinander eingebaut. Um die Kühlrohrregister in Kühlkreisläufe einzubinden, sind über den Sandwichelementen ein Zulauf-, ein Ablauf- und Verbindungsrohre vorgesehen. Im Kontaktbereich der aneinander anschliessenden Elemente treten an der Unterseite der Kühldecke Fugen auf, die gegebenenfalls überspachtelt oder überklebt werden. Diese Sandwichelemente sind mit einer aufwendigen Montage verbunden, weil sie schwer sind und für die erwähnten Rohre einen Freiraum über der Kühldecke brauchen. Die Herstellung der Elemente ist sehr aufwendig, weil zwei Trockenbauplatten mit einem gewünschten Abstand zueinander montiert und vorgängig die Kühlleitungen eingelegt werden müssen. Zur Schalldämmung müssten weitere Elemente eingesetzt werden.

Aus der DE 42 43 426 ist eine in einer Form hergestellte Platte mit eingelegten Kunststoffröhrchen bekannt. Die Gussmasse zum Herstellen der Platte besteht aus Sand der mit einem flüssigen Bindemittel gemischt ist. Die Herstellung der Gussplatten ist sehr aufwendig, insbesondere weil die Röhrchen beim Einfüllen der Gussmasse lagerichtig gehalten werden müssen. Damit die Platten für den Transport und die Montage eine genügend grosse Stabilität aufweisen, müssen sie eine minimale Dicke aufweisen, die bei grösseren Platten zu einem unerwünscht hohen Gewicht führt. Entsprechend dem hohen Gewicht ist die Montage an der Decke aufwendig und es müssen stark belastbare Verbindungen zur Decke ausgebildet werden. An einer Decke oder einer Wand montierte einzelne Platten erscheinen als Fremdkörper. Zudem müssen zum Bereich der Platte Anschlussleitungen verlegt werden.

WO2004/008032A1 beschreibt eine Lösung bei der zum Bereitstellen einer Wärmetausch-Berandungsfläche eines Raumes Wärmetauscher-Elemente mit mindestens einer Wärmetauscher-Leitung verwendet werden. Die Elemente sind plattenförmig und umfassen eine Fasermatte. Eine Putzschicht haftet an der Fasermatte und die Wärmetauscher-Leitung verläuft zumindest teilweise in der Putzschicht. Die Fasermatte wirkt als Isolation. Dadurch wird gewährleistet, dass der grösste Anteil des Wärmeflusses von und zur mindestens einen Wärmetauscher-Leitung durch die Putzschicht, also zwischen Innenraum und Leitung, auftritt. Weil die Leitung aller Wärmetauscher-Elemente beim Montieren an einen Wärmetausch-Kreis angeschlossen werden müssen, entsteht ein grosser Montageaufwand.

Neuere Lösungen für den Temperaturausgleich in Innenräumen benützen die Betonmasse der Decke oder gegebenenfalls der Wände als Speicher. Die Leitungen für das Wärmetransferfluid sind direkt in der Betonmasse angeordnet. Zum Heizen wird die Betonmasse auf eine Temperatur gebracht, die etwas über der gewünschten Raumtemperatur liegt und zum Kühlen auf eine Temperatur die unter der gewünschten Raumtemperatur liegt. Weil die Betonmasse einen trägen Speicher bildet, kann bereits passiv im 24 Stunden Verlauf ein Ausgleich geschaffen werden. Gegebenenfalls kann ein aktives Erwärmen oder Abkühlen der Betonmasse zu Zeiten mit Niedertarifen gemacht werden. Um den gewünschten Wärmetransfer zwischen Innenraum und Betonmasse gewährleisten zu können, muss die Betonmasse über eine genügend grosse Oberfläche mit dem Innenraum in Kontakt treten. Offene Betonflächen können akustisch und ästhetisch unangenehme Wirkungen erzielen. Um Akustikanforderungen zu erfüllen, werden akustische Absorberflächen, meist als von der Decke herunter gehängte Elemente, installiert. Diese Elemente schränken den offenen Rohdeckenanteil ein und reduzieren den Wärmeaustausch.

Es gibt Lösungen bei denen von der Decke herunter gehängte Lochbleche Wärmeaustauschflächen bilden, die dem Innenraum zugewandt sind und einen Wärmeaustausch zum Innenraum direkt über Strahlung und Konvektion gewährleisten. Die Lochbleche sind über im Querschnitt H-förmige Profile mit der Betondecke verbunden. Im Zwischenraum zwischen den Lochblechen und der Betondecke sind Akustikmatten auf die Lochbleche aufgelegt. Der Wärmeaustausch ist nicht optimal und die Lochblechflächen sind optisch nicht attraktiv.

Der Erfindung liegt aufgrund der Mängel der Lösungen gemäss dem Stande der Technik die Aufgabe zugrunde, eine bezüglich des Aufbaus, der Montage und der verwendeten Elemente einfache Lösung zu finden, die einen hohen Wärmefluss gewährleistet, optisch ansprechend sowie schalldämmend ist.

Diese Aufgabe wird durch die Merkmale des Anspruches 1 bzw. 10 gelöst. Die abhängigen Ansprüche beschreiben alternative bzw. bevorzugte Ausführungsformen.

Eine erfindungsgemässe Baustruktur umfasst einen Raumbegrenzungsaufbau an einer Grundfläche der Baustruktur mit Wärmeaustauschflächen, die von der Grundfläche beabstandet und mit Verbindungen an der Grundfläche befestigt sind. Die Wärmeaustauschflächen sind mit einer Putzschicht, vorzugsweise mit einer luftdurchlässigen Putzschicht, versehen und die Wärmeaustauschflächen sowie die Verbindungen zwischen den Wärmeaustauschflächen und der Grundfläche sind aus einem zusammenhängenden metallischen Flachmaterial mit Durchtrittsöffnungen gebildet. Das Flachmaterial umfasst Kontaktflächen zur Grundfläche, von der Grundfläche wegführende Stegflächen sowie die Wärmeaustauschflächen, wobei Falzbereiche zwischen diesen Teilflächen des Flachmaterials ausgebildet sind.

Bei der Lösung der Aufgabe wurde erkannt, dass der Wärmefluss zwischen der Grundfläche und den Wärmeaustauschflächen dann besonders effizient ist, wenn er in einem zusammenhängenden metallischen Flachmaterial erfolgt. Durch das Beseitigen der Kontaktübergänge zwischen Verbindungselementen und Wärmeaustauschflächen kann die Wärmekopplung zwischen einer bauseitigen Grundfläche und einer davon beabstandeten Wärmeaustauschfläche verbessert und die Montage vereinfacht werden. Im zusammenhängenden metallischen Flachmaterial gibt es durchgehende Metallware von der Grundfläche zu den Wärmeaustauschflächen. Durchtrittsöffnungen in den Wärmeaustauschflächen erlauben zusammen mit der Verwendung einer luftdurchlässigen Putzschicht an den Wärmeaustauschflächen das Optimieren der akustischen Dämmwirkung und der optischen Erscheinung. Das metallische Flachmaterial weist darum zumindest bei den Wärmeaustauschflächen Durchtrittsöffnungen auf.

Als metallisches Flachmaterial wird beispielsweise Streckblech verwendet. Streckblech kann einfach hergestellt werden und ist entsprechend günstig. Weil die um die Durchtrittsöffnungen verlaufenden Teilflächen des Streckblechs nicht in einer gemeinsamen Ebene liegen, können sie zu einem guten Haften des aufgetragenen Putzes beitragen. Dabei entsteht das Halten des Putzes am Streckblech zumindest teilweise als formschlüssiges Halten durch das Umschliessen von verschieden ausgerichteten Teilflächen des Streckblechs. Für eine gute Wärmeaufnahme an der Grundfläche muss die Schichtdicke einer wärmeleitenden Verbindungsschicht (Kleber oder Mörtel) aber gross gewählt werden, wenn die Teilflächen des Streckblechs nicht in einer gemeinsamen Ebene liegen. Um bereits mit einer kleinen Schichtdicke der Verbindungsschicht einen guten Wärmeübergang zwischen Grundfläche und Streckblech zu erzielen, werden vorzugsweise zumindest die Kontaktflächen zur Grundfläche flachgewalzt, gegebenenfalls aber das gesamte Streckblech.

Es sind verschiedene wärmeleitende Kleber oder Mörtel auf dem Markt erhältlich. Beispielsweise kann ein schnelltrocknender mineralischer Klebemörtel mit der Bezeichnung Sto-Baukleber-QS verwendet werden.

Es sind auch Ausführungsformen möglich, bei denen als metallisches Flachmaterial Lochbleche, Gitter, Drahtgeflechte oder Drahtgewebe verwendet werden. Lochblech hat einerseits den Vorteil, dass die Durchtrittsöffnungen gezielt nur in den Bereichen der Wärmeaustauschflächen ausgebildet werden können. Lochblech hat andererseits den Nachteil, dass es im Verhältnis zu Streckblech teuerer ist und dass das Haften des Putzes eingeschränkt sein kann. Bei metallischen Oberflächen an denen der Putz nicht gut haftet, kann ein Haftvermittler aufgetragen werden. Auch bei Gittern ist der Herstellungsprozess aufwändiger als bei Streckblech. Wenn Flachmaterial mit kleinen Durchtrittsöffnungen gewünscht wird, so können Drahtgeflechte und insbesondere Drahtgewebe vorteilhaft sein, wobei dann das Haften des Putzes weniger gut erzielt wird. Es versteht sich von selbst, dass auch Drahtgeflechte und Drahtgewebe mit grösseren Durchtrittsöffnungen eingesetzt werden können. Zumindest ein Teil der Drähte bilden die gewünschte durchgehende Metallware von der Grundfläche zu den Wärmeaustauschflächen. Mit der Wahl eines genügend grossen Drahtdurchmessers kann eine gute Wärmeleitung gewährleistet werden. Das Haften des Putzes kann auch durch eingepresste Formstrukturen verbessert werden. Es wäre auch möglich ein metallisches Flachmaterial aus Metallwolle, vorzugsweise Aluminiumwolle, herzustellen, wobei die gewünschte durchgehende Metallware von der Grundfläche zu den Wärmeaustauschflächen bei kleinen Spahnlängen nicht gegeben wäre und die Querschnitte der Spähne für eine gute Wärmeleitung kaum genügen würden.

Beim Umformen von Abschnitten des metallischen Flachmaterials zu Elementen mit Kontaktflächen zur Grundfläche, Stegflächen und Wärmeaustauschflächen ist es zweckmässig mit Formschritten die Falzbereiche zwischen diesen Teilflächen des Flachmaterials auszubilden. Weil Falzbereiche mit unterschiedlichen Formgebungen möglich sind, können die Falzschritte mit Falz-, Beuge- oder anderen Umformungsschritten ausgebildet werden. Es kann vorteilhaft sein, wenn unterschiedliche Formgebungsarten kombiniert werden. Falzbereiche sind somit in einem sehr allgemeinen Sinne als Umformungsbereiche mit beliebigen Querschnittsformen zu verstehen.

Wenn Flachmaterial ab Rollen verarbeitet wird, so können beispielsweise zuerst Abschnitte abgetrennt werden. Diese Abschnitte werden einzeln zu den gewünschten Elementen umgeformt. Dabei kann es zweckmässig sein, wenn eine Grundform mittels Pressformen, bzw. Tiefziehen ausgebildet wird. Diese Grundform kann mit Formwerkzeugen weiter bearbeitet werden. Flachmaterial ab Rollen kann aber auch kontinuierlich in die gewünschte Form umgeformt werden, wobei dann Abschnitte vom zumindest teilweise ausgeformten Material abgetrennt werden. Bei der kontinuierlichen Umformung wird das Flachmaterial durch eine Formeinrichtung mit Formwerkzeugen, beispielsweise Formrollen, geführt und dabei in die gewünschte Querschnittform umgeformt.

Beim metallischen Material ist die Form und nicht die Herstellungsweise entscheidend. Entsprechend bedeutet das Merkmal, dass die Wärmeaustauschflächen sowie die Verbindungen zwischen den Wärmeaustauschflächen und der Grundfläche aus einem zusammenhängenden metallischen Flachmaterial gebildet sind, dass das metallische Material der Kontaktflächen, der Stegflächen und der Wärmeaustauschflächen zusammenhängen ist und im Verhältnis zur Länge und Breite der einzelnen Elemente eine kleine Mächtigkeit aufweist. Das metallische Material mit der kleinen Mächtigkeit kann auf verschiedene Arten hergestellt werden. Insbesondere kann ein Element des metallischen Materials auch aus Teilelementen zusammengesetzt sein, wobei dann aber die Wärmeleitung über flächige Teilbereiche des metallischen Materials erfolgt, welche sich über die ganze Länge des Elements erstrecken.

Wenn die Falzbereiche zwischen den Kontaktflächen zur Grundfläche und den von der Grundfläche wegführende Stegflächen und/oder die Falzbereiche zwischen den Wärmeaustauschflächen und den Stegflächen kleine Winkel zwischen den jeweils anschliessenden Flächen bilden müssen, so kann das Ausformen dieser Falzbereiche bei mehreren Grundflächen bzw. Wärmeaustauschflächen und der entsprechenden Anzahl von Stegflächen sehr schwierig werden. Mittels Strangpressen können äusserst komplexe Querschnittformen erzielt werden. Auch wenn die Krümmungsbereiche zwischen den Stegflächen und den Kontaktflächen bzw. den Wärmeaustauschflächen nicht mehr mittels Biegen ausgebildet werden, sollen diese Krümmungsbereiche ebenfalls als Falzbereiche bezeichnet werden.

Beim Strangpressen nimmt der Aufwand mit der Breite der herzustellenden Elemente zu, so dass diese Herstellungsmethode besonders für schmale Elemente geeignet ist. Wenn die hergestellten Elemente beidseits parallel zu den Falzlinien verlaufende Verbindungsbereiche umfassen, so können zwei oder mehr Einzelelemente zu einem zusammenhängenden metallischen Flachmaterial mit Wärmeaustauschflächen, Stegflächen und Kontaktflächen verbunden werden. Die Verbindung der Verbindungsbereiche kann als formschlüssige Verbindung, beispielsweise als Steckverbindung oder als Falzverbindung, sowie als Schweiss- oder Klebeverbindung ausgebildet werden. Die Verbindung wird so ausgebildet, dass die Funktion der Wärmeaustauschflächen, Stegflächen und Kontaktflächen nicht beeinträchtigt wird und dass das zusammengestellte Element eine genügende Stabilität und die gewünschte Wärmeübertragungs-Eigenschaft aufweist.

Die Grösse der Durchtrittsöffnungen im metallischen Flachmaterial wird an den aufzutragenden Putz und an die Methode zum Auftragen des Putzes angepasst. In einer bevorzugten Ausführungsform wird zäher Putz auf die Wärmeaustauschflächen aufgetragen, insbesondere gestrichen oder gegebenenfalls gespritzt. Es ist auch möglich eine Putzmischung mit einem Faseranteil zu verwenden, wobei die Fasern den Durchtritt des Putzes durch die Durchtrittsöffnungen einschränken sollen. Es ist möglich relative grosse Durchtrittsöffnungen mit dem Putz zu überziehen. Gegebenenfalls wird auf der Rückseite der Wärmeaustauschflächen vor dem Auftragen des Putzes ein flächiges Element, vorzugseise Flies angeordnet, das den unerwünschten Durchtritt von Putz einschränkt. Ein Teil des aufgebrachten Putzes umschliesst Teilbereiche der Berandungen der Durchtrittsöffnungen. Bei Durchtrittsöffnungen, die in zwei Hauptrichtungen unterschiedlich grosse Ausdehnungen aufweisen, beträgt die Ausdehnung der Durchtrittsöffnungen in einer ersten Hauptrichtung maximal 42mm, insbesondere maximal 10mm und in einer zweiten Hauptrichtung maximal 8mm, insbesondere maximal 5mm. Bei Durchtrittsöffnungen, die in beiden Hauptrichtungen im Wesentlichen gleichgross sind, beträgt der Durchmesser der Durchtrittsöffnungen maximal 15mm, insbesondere maximal 8mm. Bei der Verwendung von gelochten Wärmeaustauschflächen liegt der bevorzugte Lochdurchmesser im Bereich von 1 bis 6 mm, insbesondere bei im Wesentlichen 5mm. Der Lochflächenanteil an den Wärmeaustauschflächen beträgt 2 bis 30%, insbesondere im Wesentlichen 25%.

Die Lage und der Flächenanteil der Durchtrittsöffnungen im metallischen Flachmaterial werden vorzugsweise zur Optimierung des Wärmeflusses und/oder der Schallabsorption angepasst. In einer bevorzugten Ausführungsform weisen nur die Wärmeaustauschflächen Durchtrittsöffnungen auf, so dass der Wärmefluss durch die Kontaktflächen und die Stegflächen nicht durch Durchtrittsöffnungen eingeschränkt wird. Die Durchtrittsöffnungen werden vorzugsweise vor der Umformung des metallischen Flachmaterials im Bereich der später gebildeten Wärmeaustauschflächen ausgebildet, was beispielsweise mit einem einfachen Stanzvorgang erzielbar ist. Bei bereits geformten Elementen, insbesondere bei Elementen, die mittels Strangpressen hergestellt werden, können die Durchtrittsöffnungen nur an den profilförmigen Elementen ausgebildet werden, wobei dann beim gegebenenfalls vorgesehenen Stanzen von Löchern passende Abstützeinrichtungen verwendet werden. Ausführungen mit Stegflächen ohne Durchtrittsöffnungen weisen schmale voneinander getrennte Hohlraumbereiche auf, deren Wirkung auf die Schallabsorption sich von den Ausführungen mit durch Durchtrittsöffnungen der Stegflächen verbundenen Hohlräumen unterscheidet.

Die durch dichte Stegflächen getrennten Hohlraumbereiche bilden mit den Durchtrittsöffnungen und den durchgehenden Poren der Putzschicht bei den Wärmeaustauschflächen voneinander getrennte Helmholtz-Resonatoren. Wenn unterschiedlich breite Wärmeaustauschflächen ausgebildet werden, so können Resonatoren bereitgestellt werden, die bei unterschiedlichen Frequenzen Absorptionsmaxima aufweisen. Durch eine gezielte Wahl der Breite der Wärmeaustauschflächen können beispielsweise auch im tiefen Frequenzbereich gewünschte Frequenzen stärker absorbiert werden.

Die metallische Wärmeaustauschflächen weisen einen im Wesentlichen konstanten Abstand zur Grundfläche - bzw. zu einer Fläche durch die Kontaktflächen - auf, wobei der Abstand vorzugsweise in einem Bereich von 10mm bis 80mm, insbesondere von 25mm bis 45mm liegt.

Die Materialstärke des metallischen Flachmaterials liegt in einem Bereich von 0.2mm bis 3mm, vorzugsweise aber in einem Bereich von 0.5mm bis 1.8mm, insbesondere bei im Wesentlichen 1.5mm. Bei Streckmetall wird als Materialstärke vorzugsweise die Mächtigkeit des Blechs angegeben, bevor es geschlitzt und gestreckt wird.

Besonders vorteilhaft ist eine Formgebung des Blechs, die in einer Schnittebene senkrecht zu - den Falzbereichen zugeordneten - Falzlinien Schwalbenschwanz ähnliche Formen zeigt. Das heisst, die Schnittlinien der von der Grundfläche bzw. von den Kontaktflächen wegführenden Stegflächenpaare, welche über eine Wärmeaustauschfläche miteinander verbunden sind, laufen gegen die Wärmeaustauschfläche hin auseinander. Analog laufen die Schnittlinien der von Wärmeaustauschflächen wegführenden Stegflächenpaare, welche über eine Kontaktfläche miteinander verbunden sind, gegen die Kontaktfläche hin auseinander. Sowohl zwischen aneinander anschliessenden Wärmeaustauschflächen als auch zwischen aneinander anschliessenden Kontaktflächen können Abstände auftreten.

Um eine zusammenhängende Putzschicht auf die Wärmeaustauschflächen auftragen zu können, werden die Abstände zwischen den Wärmeaustauschflächen möglichst klein gehalten. Gegebenenfalls werden aber diese Abständ mit einem Abdeckelement so überdeckt, dass eine zusammenhängende Putzschicht ausgebildet werden kann. Das Abdeckelement kann bei der Putzschicht als zusammenhängende Stabilitätsschicht eingesetzt werden, wobei es für die gewünschte Schalldämmeigenschaft natürlich auch Durchtrittsöffnungen aufweist. Damit der Wärmeaustausch zwischen dem Innenraum und den Wärmeaustauschflächen durch das Abdeckelement nicht unerwünscht stark eingeschränkt wird, wird dieses möglichst dünn und insbesondere aus Material mit einer guten Wärmeleitfähigkeit, beispielsweise aus metallischem Flachmaterial wie einem dünnen Streckmetall, einem Gitter, einem Drahtgeflecht oder einem Drahtgewebe hergestellt. Das Abdeckelement kann beispielsweise über die Putzschicht an den Wärmeaustauschflächen haften. Gegebenenfalls aber wird das Abdeckelement vor dem Auftragen der Putzschicht an den Wärmeaustauschflächen befestigt, beispielsweise über mechanische Verbindungen oder Schweiss- sowie Klebe-Verbindungen.

Gegebenenfalls schliessen die Wärmeaustauschflächen direkt aneinander an. Dann bildet eine Kontaktfläche zusammen mit den beiden anschliessenden Stegflächen in der Schnittdarstellung ein Dreieck, von dem zwei Eckpunkte bei der Grundfläche liegen und ein Eckpunkt bei den aneinander anschliessenden Wärmeaustauschflächen. Wenn auch die Kontaktflächen direkt oder über einen kleinen Abstand aneinander anschliessen, so können die aneinander anschliessenden Kontaktflächen und auch die aneinander anschliessenden Wärmeaustauschflächen je miteinander verbunden werden. Dabei entsteht auch mit dünnem Flachmaterial ein stabiles Wabenelement, bei dem eine auf die Wärmeaustauschflächen aufgetragene Putzschicht einen Transport und die Montage im Wesentlichen unbeschädigt übersteht.

Wenn die Wärmeaustauschflächen breiter sind als die Grundflächen, so ist die Schwalbenschwanzform der Wärmeaustauschfläche mit den beidseits anschliessenden Stegflächen bei der Grundfläche offen, was beispielsweise das Einbringen von Fasermaterial erleichtert. Entsprechend den Breiten der Wärmeaustauschflächen und der Kontaktflächen können unterschiedliche Abstände zwischen den Wärmeaustauschflächen und den Kontaktflächen ausgebildet werden. Die Breite der Kontaktflächen wird vorzugsweise so gewählt, dass ein genügender Wärmeleitungskontakt zwischen Grundfläche und dem metallischen Flachmaterial gewährleistet ist. Weil die Wärmeleitungsfähigkeit im zusammenhängenden Flachmaterial sehr gross ist, kann die Breite der Kontaktflächen wesentlich schmaler ausgebildet werden als die Breite der Wärmeaustauschflächen.

In bevorzugten Ausführungsformen entspricht die Gesamtfläche der Kontaktflächen mindestens einem Viertel, vorzugsweise mindestens der Hälfte, insbesondere mindestens zwei Dritteln, der Gesamtfläche der Wärmeaustauschflächen.

Der Innenwinkel zwischen aneinander schliessenden Wärmeaustauschflächen und Stegflächen bzw. zwischen aneinander schliessenden Kontaktflächen und Stegflächen ist vorzugsweise grösser als 45°. Dadurch kann die benötigte Menge des Flachmaterials reduziert werden, insbesondere wenn gleichzeitig die Gesamtfläche der Kontaktflächen kleiner ist als die Gesamtfläche der Wärmeaustauschflächen.

Zur Verbesserung der akustischen Dämmwirkung wird gegebenenfalls zumindest in Teilbereichen zwischen den metallischen Wärmeaustauschflächen und der Grundfläche bzw. der Ebene mit den Kontaktflächen Fasermaterial oder gegebenenfalls auch körniges oder flockiges Dämmmaterial angeordnet. Gegebenenfalls wird Fasermaterial bzw. Dämmmaterial in den Bereichen ohne Wärmeaustauschflächen angeordnet.

Weil der Abstand zwischen den Wärmeaustauschflächen und der Grundfläche im Bereich von 10 bis 80mm liegt, hat das Fasermaterial eine Mächtigkeit im Bereich von 10-80mm, vorzugsweise aber von 20-60mm. Die Schallabsorption lässt sich mit zunehmender Mächtigkeit des Fasermaterials zu tieferen Frequenzen hin vergrössern. Dies gilt besonders für die Bereiche ohne Wärmeaustauschflächen. Bei bevorzugten Ausführungsformen wird Fasermaterial mit einer Dichte von 40-60kg/m³ verwendet, insbesondere Stein- oder Glas-, bzw. Mineralfasermaterial.

Der Putz überdeckt die metallischen Wärmeaustauschflächen gegen den Innenraum hin mit einer Schichtdicke von maximal 30mm, vorzugsweise aber maximal 10mm. Bei bevorzugten Ausführungsvarianten hat die Putzschicht der Wärmetauscher-Elemente eine Mächtigkeit im Bereich von lediglich 0.3 bis 5mm, vorzugsweise aber von 0.5 bis 3mm. Es werden vorzugsweise Wärmeübertragungs-Elemente mit einer Putzschicht hergestellt. Diese Putzschicht wird beim Herstellungsbetrieb vorzugsweise flach und auf eine gewünschte Lage relativ zu den Kontaktflächen des Wärmeübertragungs-Elements geschliffen. Weil die Wärmeleitung des Putzes kleiner ist als die Wärmeleitung der metallischen Wärmeaustauschflächen bzw. des metallischen Flachmaterials und damit den Wärmeaustausch verringert, wird die Schichtdicke der Putzschicht bzw. die Überdeckung der Wärmeaustauschflächen möglichst klein gehalten. Bevorzugt wird ein mikroporöser Putz, insbesondere ein auf dem Markt erhältlicher BASWAphon Putz, verwendet.

Beim Montieren eines Wandaufbaus werden metallische Wärmeaustauschflächen von der Grundfläche beabstandet angeordnet, wobei Verbindungen zwischen den metallischen Wärmeaustauschflächen und der Grundfläche ausgebildet sind. Die Wärmeaustauschflächen sowie die Verbindungen zwischen den Wärmeaustauschflächen und der Grundfläche werden aus einem zusammenhängenden metallischen Flachmaterial gebildet, das zumindest bei den Wärmetauschflächen Durchtrittsöffnungen umfasst, wobei am Flachmaterial die Wärmeaustauschflächen, Kontaktflächen und Stegflächen zwischen den metallischen Wärmeaustauschflächen und den Kontaktflächen über Falzbereiche aneinander anschliessen, die Wärmeaustauschflächen mit einer Putzschicht versehen werden und eine wärmeleitende Verbindungsschicht zumindest auf Teilbereiche der Grundfläche aufgebracht wird, über welche Verbindungsschicht die Kontaktflächen an der Grundfläche befestigt werden, so dass die Stegflächen von der Grundfläche weg zu den Wärmeaustauschflächen führen.

Entsprechend der Grösse der Grundfläche und der Wärmeübertragungs-Elemente werden an der Grundfläche aneinander anschliessend mehrere Elemente mit metallischen Wärmeaustauschflächen, Kontaktflächen und Stegflächen angeordnet. Anschliessend wird zumindest in Kontaktbereichen zwischen den Elementen vorzugsweise aber über die gesamte Fläche aller Wärmeaustauschflächen Putzmasse aufgetragen, so dass eine zusammenhängende Putzoberfläche entsteht. An der freien Oberfläche der Putzschicht können somit Unebenheiten ausgleichen werden. Wenn die ebene Oberfläche nicht alleine mit dem Auftragen einer dünnen Schlussschicht erzielt werden kann, so wird gegebenenfalls vor dem Auftragen einer dünnen Schlussschicht ein Schleifschritt und/oder ein weiterer Auftragsschritt für eine Ausgleichsschicht durchgeführt.

Zum Aushärten der Putzschicht werden organische oder anorganische Binder eingesetzt. So können etwa selbst vernetzende Binder, Additions-Polymerisate, Kunstharzbinder, beispielsweise unter Wasserentzug härtende Dispersionen, im UV-Licht härtende Binder, Zweikomponenten-Binder, oder auch Binder mit Silikaten bzw. Wasserglass oder eventuell Zement eingesetzt werden. Um die Herstellung der Wärmeübertragungs-Element mit einem kleinen Zeitaufwand zu ermöglichen, werden gegebenenfalls schneller bindende Binder bevorzugt.

Auch wenn die Wärme zwischen dem Rauminnern und den Wärmeaustauschflächen nur durch eine dünne Putzschicht fliessen muss, so kann es von Vorteil sein, wenn die Wärmeleitfähigkeit des Putzes erhöht wird, wenn der Hohlraumanteil im Putz verkleinert und/oder eine Putzmasse, bzw. ein Zusatz zur Putzmasse, mit hoher Wärmeleitfähigkeit eingesetzt wird. Ein Putz mit einem Kornanteil kann beispielsweise Aluminiumhydroxid, insbesondere Aluminiumorthohydroxid, umfassen.

Gegebenenfalls werden zwei Lagen Putz mit unterschiedlichen Kornanteilen aufgetragen, vorzugsweise das System BASWAphon Classic, insbesondere eine erste Lage mit einem gröberen Korn (beispielsweise mit einer mittleren Korngrösse von im Wesentlichen 0.7mm), gegebenenfalls mit einer kleineren spezifischen Dichte, und eine auf die erste Lage aufgetragene zweite Lage mit einem feineren Korn (beispielsweise mit einer mittleren Korngrösse von im Wesentlichen 0.3mm), insbesondere mit grösserer Dichte.

Bei der Verwendung lediglich einer Putzmischung weist der Kornanteil beispielsweise eine mittlere Korngrösse im Bereich von 0.2 bis 0.8mm, vorzugsweise aber von 0.5 oder 0.7mm auf.

Damit die Elemente einfach zu handhaben sind, weist die Hauptfläche eines bevorzugten rechteckigen Elementes eine Länge im Bereich von 60 bis 120cm vorzugsweise von im wesentlichen 80cm und eine Breite im Bereich von 40 bis 80cm vorzugsweise von im wesentlichen 60cm aufweist. Die zwischen den Elementen und der Decke benötigten Haftkräfte sind aufgrund des kleinen Gesamtgewichtes eines Elementes klein und können mit einer Klebeverbindung gewährleistet werden. Elemente mit einer Putzschicht können flächendeckend nebeneinander an Wände oder Decken montiert werden. Wenn die Fugen zwischen den beschichteten Elementen ausgefüllt und die zusammenhängende Putzoberfläche mit einer Deckschicht versehen wird, so entsteht eine durchgängige Innenfläche. Die Fläche, an der keine Wärmeübertragungs-Elemente benötigt werden, kann mit beschichteten Fasermatten belegt werden, wodurch die gesamte Decke bzw. Wand ein einheitliches Erscheinungsbild erhält. Durch das Auftragen einer sich über alle Elemente erstreckenden Deckschicht, kann das Erkennen der Wärmeübertragungs-Elemente verhindert werden.

Teilbereiche der Putzschicht, insbesondere Bereiche zwischen den Wärmeaustauschflächen, können als elastische Membranbereiche im Tieftonbereich schalldämmend wirken. Weil bei einer bevorzugten Ausführungsform die Putzschicht und die Wärmeaustauschflächen luftdurchlässig sind, ist auch eine gute Schalldämmung im mittleren und hochfrequenten Bereich erzielbar, wobei gegebenenfalls dazu auch noch Fasermaterial zumindest in Teilbereiche der Wärmeübertragungs-Elemente eingesetzt wird .

Eine verformbare Putzschicht kann mit Kunstharzbindern bzw. Dispersionsbindern erzielt werden. Insbesondere wenn die Körner der Putzmasse lediglich über dünne elastische Brücken miteinander verbunden sind, also beispielsweise wenn der Binderanteil tief ist, kann verhindert werden, dass die Putzschicht aufgrund von Verformungen der Wärmeaustauschflächen beschädigt wird.

Es ist auch möglich Wärmeübertragungs-Elemente ohne Putzschicht an der Grundfläche zu montieren und die Putzschicht erst auf die montierten Wärmeaustauschflächen aufzutragen, wobei es dann schwieriger ist, eine im Wesentlichen konstante Schichtdicke zu erzielen. Vorzugsweise wird die Putzschicht auf montierte Wärmeaustauschflächen als Spritzputz aufgespritzt. Bei grossen Durchtrittsöffnungen im metallischen Flachmaterial ist vorzugsweise ein Fliess an der der Grundfläche zugewandten Seite der Wärmeaustauschflächen angeordnet, welches den Durchtritt des Spritzputzes durch die Durchtrittsöffnungen einschränkt. Es ist auch möglich eine Putzmischung mit einem Faseranteil zu verwenden, wobei die Fasern den Durchtritt des Putzes durch die Durchtrittsöffnungen einschränken sollen.

Der erfinungsgemässe Raumbegrenzungsaufbau weist verschiedene variierbare Parameter auf, die in geeigneter Kombination jeweils unterschiedliche Schallabsorptionseigenschaften bewirken.

Teilbereiche der Putzschicht zwischen den Wärmeaustauschflächen wirken auch als elastische Membranbereiche im Tieftonbereich schalldämmend, wobei die Mächtigkeit und Elastizität der Putzschicht, gegebenenfalls kombiniert mit einem Abdeckelement, und die Federeigenschaft von insbesondere an die Putzschicht anschliessemdem Fasermaterial die Frequenz des Absorptionsmaximums bestimmen. Die Dämpfung durch das Anregen von Membranschwingungen ist meist auf enge Frequenzbereiche beschränkt.

Teilbereiche der Putzschicht bei den Wärmeaustauschflächen mit Durchtrittsöffnungen wirken als relativ starre mikroporöse Schichten, wobei die Starrheit durch die metallischen Wärmeaustauschflächen und die jeweils beidseitigen Falzbereiche erzielt wird. Die Mikroporosität wird durch die durchgehenden Putzschichtporen bei den Durchtrittsöffnungen erzielt. Die Porenlänge entspricht der Mächtigkeit der Putzschicht und der Porenquerschnitt hängt von den Korngrössen und dem Binderanteil der Putzschicht ab. Grob kann davon ausgegangen werden, dass der mittlere Durchmesser der durchgehenden Poren im Grössenbereich der mittleren Korngrösse liegt, also bei den bevorzugten Putzschichten im Bereich von 0.2 bis 0.8mm liegt. Weil der Porendurchmesser eindeutig kleiner ist als die Mächtigkeit der Putzschicht wird ein Dämpfungseffekt erzielt, welcher ähnlich ist zur Dämpfung mit einer mikroperforierten Platte, die in EP 0 697 051 B1 beschrieben ist. Es hat sich nun aber gezeigt, dass der in EP 0 697 051 B1 verlangte Verzicht auf poröses oder faseriges Material im Hohlraum oder an den Platten die Optimierung der Schallabsorption negativ einschränkt, insbesondere ist dabei der Absorptionsgrad nur in engen Frequenzbereichen relativ hoch.

Die über die Stegflächen von der Grundfläche beabstandete poröse Putzschicht bei einer Wärmeaustauschfläche mit Durchtrittsöffnungen kann zusammen mit Fasermaterial im Hohlraum zwischen der Grundfläche und der Wärmetauschfläche so ausgelegt werden, dass im Frequenzbereich von 125Hz bis 4kHz eine breitbandige hohe Schallabsorption erzielt wird. Es ist ein wesentlicher akustischer Vorteil der vorliegenden Lösung, dass die erhöhte Absorption über einen grossen Frequenzbereich erzielt werden kann. Für eine hohe und breitbandige Absorption mit dem Absorptionsmaximum in einem gewünschten Frequenzbereich müssen der Porendurchmesser, der Anteil der Summe der Porenquerschnittsflächen an der gesamten Oberfläche, die Mächtigkeit der Putzschicht, der Abstand der Wärmeaustauschfläche von der Grundfläche und der Durchströmwiderstand des Fasermaterials im Bereiche zwischen der Wärmetauschfläche und der Grundfläche aufeinander abgestimmt optimal gewählt werden, vorzugsweise in den vorgängig angegebenen Bereichen. Die entstehende Absorption kann als modifizierte Helmholtz-Resonator Absorption erklärt werden, bei welcher die Schwingung der Luft in den durchgängigen Poren der Putzschicht bei der Wärmeaustauschfläche von der Luft im Hohlraum zwischen der Wärmeaustauschfläche und der Grundfläche gefedert wird. Die Federeigenschaft beeinflusst die anregbaren Schwingungen bzw. die Frequenzen mit erhöhter Absorption, wobei die Dämpfung der Schwingungen durch die Luftreibung in den Poren und gegebenenfalls im Fasermaterial des Hohlraums bewirkt wird.

Bei einer bevorzugten Lösung weist das System aus poröser Putzschicht und metallischer Wärmeaustauschfläche mit Durchtrittsöffnungen einen Strömungswiderstand R im Bereich von 500 bis 1300, insbesondere aber von 800 bis 1000 (Pa*s)/m auf, welcher sich aus der Mächtigkeit der Putzschicht und dem Querschnitt sowie der Anzahl der durchgehenden Poren im Flächenbereich mit Durchtrittsöffnungen ergibt. Wenn die Putzschicht einen hohen Strömungswiderstand bzw. eine kleine gesamte Querschnittfläche von durchgehenden Poren aufweist, so darf der Durchströmwiderstand im Fasermaterial nicht zu hoch sein, weil ein hoher Gesamtwiderstand die maximale Absorptionsrate verkleinert. Wenn die Mächtigkeit der Putzschicht über 5mm, insbesondere bereits über 3mm, beträgt, so führt der entsprechend erhöhte Strömungswiderstand der porösen Sicht zu einer kleineren maximalen Absorptionsrate, zu einer Verschiebung des Maximums gegen kleinere Frequenzen sowie zu einer Verschmälerung der Absorptionskurve. Wenn der Anteil der Summe der Porenquerschnittsflächen bei Durchtrittsöffnungen an der gesamten Oberfläche zu gross wird (vorzugsweise wenn er über 25% liegt), so verschiebt sich die erhöhte Absoption hin zu höheren Frequenzen und gleicht dabei der Absorption des Fasermaterials. Wenn also die Absorption der Wärmeaustauschflächen mit Putzschicht und im Hohlraum angeordnetem Fasermaterial nahe bei der Absorption des Fasermaterials ohne Wärmetauscherflächen mit Putzschicht liegt, so kann durch die Reduktion des Lochanteils in der Wärmeaustauschfläche das Maximum der Absorptionsrate in einen gewünschten Frequenzbereich zwischen 125Hz und 1kH verschoben werden.

Bei Ausführungsformen mit zwei verschiedenen Schall absorbierenden Teilflächen, nämlich der Wärmeaustauschflächen und der dazwischen liegenden Flächen, können verschiedene Absorptionssysteme so kombiniert werden, dass die Absorptionseffekte im tiefen (unter 250Hz), mittleren (250Hz bis 1kHz) und hohen Frequenzbereich (über 1kHz) so kombiniert werden, dass der Absorptionskoeffizient in diesen Bereichen je gezielt an die jeweiligen Bedürfnisse angepasst ist. Wenn der Anteil der Wärmeaustauschflächen an der Gesamtfläche variiert wird, kann sowohl die Wärmeübertragung als auch die Schallabsorption verändert werden, wobei dies aufgrund der durchgehenden Putzschicht zu keiner Veränderung der ästhetischen Erscheinung führt.

Die Erfindung wird mit den Figuren weiter beschrieben. Dabei zeigt
- Fig. 1: einen Schnitt durch einen Wandaufbau,
- Fig. 2: eine Draufsicht auf einen Ausschnitt einer aus einem Streckblech gebildeten Wärmeaustauschfläche, die nur in einem Teilbereich mit einer Putzschicht beschichtet ist,
- Fig. 3: einen Querschnitt durch ein metallisches Flachmaterial für ein Wärmeübertragungselement,
- Fig. 4: eine perspektivische Ansicht eines metallischen Flachmaterials für ein Wärmeübertragungselement,
- Fig. 5: eine Draufsicht auf ein metallisches Flachmaterial für ein Wärmeübertragungselement,
- Fig. 6: ein Ausschnitt aus Fig. 3,
- Fig. 7: eine Darstellung der Durchtrittsöffnungen in der Wärmeaustauschfläche des Ausschnitts gemäss Fig. 6,
- Fig. 8: ein Querschnitt durch ein Wärmeübertragungselement mit metallischem Flachmaterial, einem Abdeckelement, einer Putzschicht und Fasermaterial und
- Fig. 9 und 10: einen Querschnitt durch ein metallisches Flachmaterial für ein Wärmeübertragungselement, wobei das metallische Flachmaterial aus schmalen Elementen zusammen gesetzt ist.

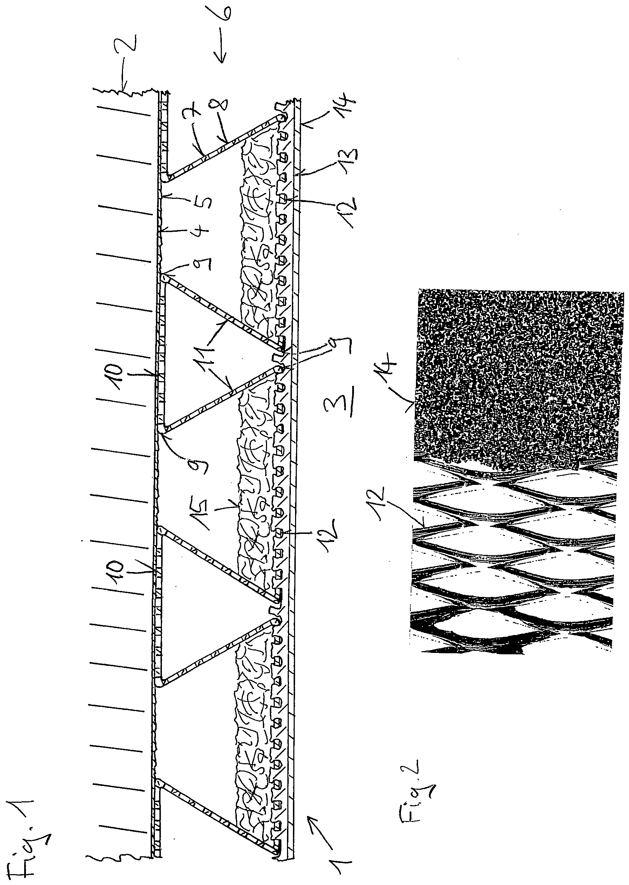

Fig. 1 zeigt einen Raumbegrenzungsaufbau 1 an einer Betondecke 2 eines Gebäudes, wobei dieser auch an einer Wand ausgebildet werden kann. Die Betondecke 2 bzw. die Wand dient als passiver oder aktiver Wärmespeicher. Vorzugsweise sind in der Betondecke 2 nicht dargestellte Leitungsregister für ein Heiz- oder Kühlfluid angeordnet. Aufgrund des Temperaturunterschiedes zwischen einem vom Raumbegrenzungsaufbau 1 berandeten Gebäudeinnenraum 3 und der Betondecke 2 entsteht zwischen dem Gebäudeinnenraum 3 und der Betondecke 2 ein Wärmeaustausch. Der Raumbegrenzungsaufbau 1 ist so gestaltet, dass er Schallenergie absorbiert, optisch attraktiv aussieht und einen Wärmeaustausch mit grosser Leistung zwischen dem Gebäudeinnenraum 3 und der Betondecke 2 erzielt.

Die Unterseite der Betondecke 2 bildet eine Grundfläche 4 der Baustruktur. Auf die Grundfläche 4 oder Teilbereiche davon ist eine wärmeleitende Verbindungsschicht 5 mit einem Kleber- oder Mörtel aufgetragen. Mit dieser Verbindungsschicht 5 werden Wärmeübertragungs-Elemente 6 an der Betondecke 2 befestigt. Die Wärmeübertragungs-Elemente 6 umfassen je ein zusammenhängendes metallisches Flachmaterial 7 mit Durchtrittsöffnungen 8, an dem mittels Falzbereichen 9, bzw. gebogenen Bereichen, Kontaktflächen 10 zur Grundfläche 4, von der Grundfläche 4 wegführende Stegflächen 11 sowie von der Grundfläche 4 beabstandete metallische Wärmeaustauschflächen 12 ausgebildet sind.

Die metallischen Wärmeaustauschflächen 12 sind mit einer Grund-Putzschicht 13 versehen. Nach dem Montieren von beschichteten Wärmeübertragungs-Elementen 6 kann eine Deck-Putzschicht 14 aufgetragen werden, mit welcher Fugen zwischen den Elementen überdeckt und eine glatte zusammenhängende Putzoberfläche gebildet wird. Bei den bevorzugten Ausführungsformen ist die gesamte Putzschicht nach dem Aushärten luftdurchlässig.

In der dargestellten Ausführungsform ist an die Wärmeaustauschflächen 12 anschliessend gegen die Grundfläche 4 hin Fasermaterial 15 angeordnet. Dieses wird vorzugsweise in der Form von Faserplatten-Streifen beim bzw. nach dem Formen des metallischen Flachmaterials eingebracht. Wenn das Fasermaterial 15 vor dem Auftragen der Grund-Putzschicht 13 eingesetzt wird, so kann es auch den Eintritt der Putzmasse durch die Durchtrittsöffungen 8 beschränken. Gegebenenfalls wird körniges, flockiges oder faseriges Material erst nach dem Montieren der Wärmeübertragungs-Elemente 6 an der Betondecke 2 in die Hohlräume eingebracht. Es versteht sich von selbst, dass die verschiedenen Hohlräume nur teilweise oder auch vollständig gefüllt werden können. Hohlräume können auch für konvektive Wärmeübertragung erwünscht sein, wobei dann aber auch Verbindungen vom Gebäudeinnenraum 3 zu diesen Hohlräumen bereitgestellt werden müssen. Das Material, die gefüllten Hohlräume und der Füllgrad wird gemäss den gewünschten akustischen Dämmeigenschaften und unter Berücksichtigung von Feuerschutzvorschriften gewählt.

Fig. 2 zeigt einen Ausschnitt einer aus einem Streckblech gebildeten Wärmeaustauschfläche 12, die nur in einem Teilbereich mit einer Putzschicht 14 beschichtet ist.

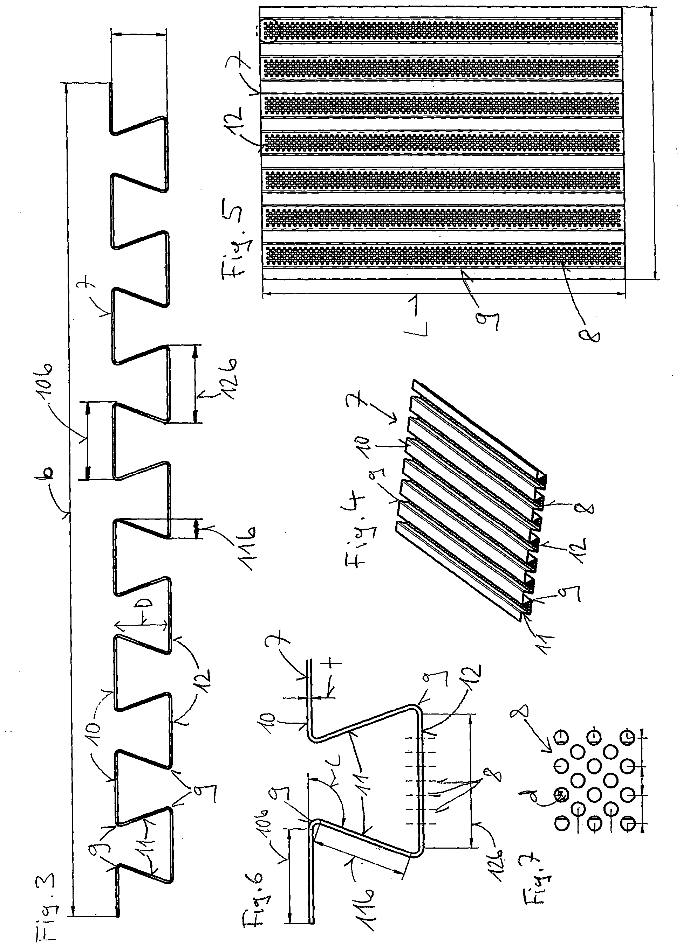

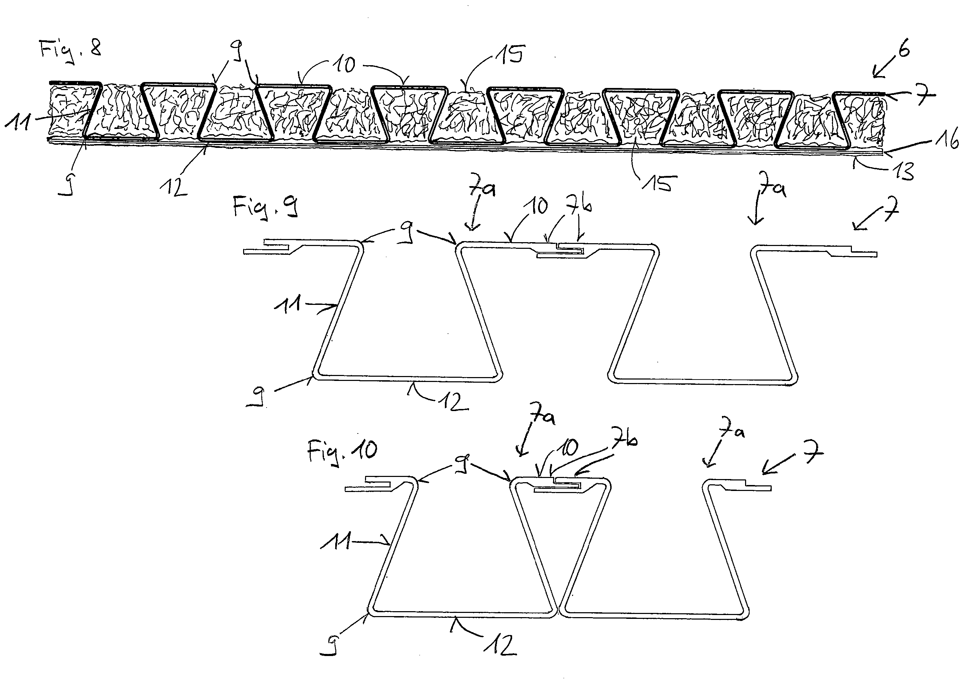

Fig. 3 bis 7 zeigen ein metallisches Flachmaterial mit der Gesamtbreite b und einer Länge L für ein Wärmeübertragungselement 6 bei dem die Durchtrittsöffnungen 8 nur im Bereich der Wärmeaustauschflächen 12 ausgebildet sind. Die Breite der Wärmeaustauschflächen 12 bzw. der Kontaktflächen 10 ist mit 12b bzw. 10b bezeichnet. Jede Stegfläche 11 überspannt in Querrichtung eine Ausdehnung 11b. In der dargestellten Ausführungsform sind die Breiten der Wärmeaustauschflächen 12 bzw. der Kontaktflächen 10 also 12b und 10b gleich gross. Unterschiedliche Breiten 12b und 10b führen zu unterschiedlich breiten Öffnungen zwischen den Wärmeaustauschflächen 12 und den Kontaktflächen 10. Die Differenz zwischen den Breiten 12b und 10b entspricht maximal zweimal der Ausdehnung 11b, wobei dann entweder die Wärmeaustauschflächen 12 oder die Kontaktflächen 10 ohne Unterbruch bzw. Öffnung aneinander anschliessen. Um eine im Wesentlichen durchgehende gesamte Wärmeaustauschfläche zu erzielen, kann wie in Fig. 10 dargestellt, die Breite 12b als Summe Breite 10b plus zweimal Breite 11b gewählt werden.

Die Mächtigkeit des metallischen Flachmaterials 7 ist mit t und der Durchmesser der Durchtrittsöffnungen 8 mit d bezeichnet. In der Fig. 6 ist ein Winkel c dargestellt, der grösser als 90° ist und um den die Stegfläche 11 von der Ebene mit der anschliessenden Kontaktfläche 10 weggebogen sein muss, damit zwischen der Kantaktfläche 10 und der Stegfläche 11 ein gewünschter spitzer Winkel ausgebildet wird. Die Breite 11b der Stegfläche 11 wird zusammen mit dem Winkel zwischen der Kantaktfläche 10 und der Stegfläche 11 so gewählt, dass der Abstand zwischen der Ebene mit den Kontaktflächen 10 und der Ebene mit den Wärmeaustauschflächen 12 einem gewünschten Abstand der Putzschicht 13 von der Grundfläche 4 und damit einer gewünschten Mächtigkeit D der Hohlräume zwischen der Ebene mit den Kontaktflächen 10 und der Ebene mit den Wärmeaustauschflächen 12 entspricht. Diese Hohlraummächtigkeit D ist für die Schallabsorption ebenfalls ein wichtiger Parameter. Weil sich die Wärmeübertragung von den Kontaktflächen zu den Wärmeaustauschflächen bei breiteren Stegflächen nur unwesentlich ändert, kann die Hohlraummächtigkeit D für eine gewünschte Schallabsorption gewählt werden, ohne dass sich dadurch für den Wärmetransport wesentliche Änderungen ergeben.

Das Wärmeübertragungselement 6 gemäss Fig. 8 umfasst metallisches Flachmaterial 7, ein Abdeckelement 16, eine Putzschicht 13 und Fasermaterial 15 in allen Hohlräumen zwischen der Ebene mit den Kontaktflächen 10 und der Ebene mit den Wärmeaustauschflächen 12, wobei das Abdeckelement 16 als Armierung der Putzschicht und zusammenhängende Auftragsfläche für die Putzschicht dient.

Fig. 9 und 10 zeigen ein metallisches Flachmaterial 7 für ein Wärmeübertragungselement, wobei das metallische Flachmaterial 7 aus schmalen Elementen 7a zusammen gesetzt ist. Die schmalen Elemente umfassen beidseits parallel zu den Falzlinien 9 verlaufende Verbindungsbereiche 7b, mit denen zwei oder mehr Einzelelemente 7a zu einem zusammenhängenden metallischen.Flachmaterial 7 mit Wärmeaustauschflächen 12, Stegflächen 11 und Kontaktflächen 10 verbunden werden können. Die dargestellte Verbindung der Verbindungsbereiche 7b ist eine formschlüssige Steckverbindung. Es versteht sich von selbst, dass die Verbindung auch als Falzverbindung oder als Schweiss- oder Klebeverbindung ausgebildet werden kann. Die Verbindung wird so ausgebildet, dass die Funktion der Wärmeaustauschflächen 12, Stegflächen 11 und Kontaktflächen 10 nicht beeinträchtigt wird und dass das zusammengestellte Element eine genügende Stabilität und die gewünschte Wärmeübertragungs-Eigenschaft aufweist.

## Patentansprüche

1. Baustruktur (2) umfassend einen Raumbegrenzungsaufbau (1) an einer von einer Betondecke oder Wand gegen einen Gebäudeinnenraum (3) gebildeten Grundfläche (4) der Baustruktur (2) mit Wärmeaustauschflächen (12), die von der Grundfläche (4) beabstandet sind und mit Verbindungen, die zwischen den Wärmeaustauschflächen (12) und der Grundfläche (4) angeordnet werden, wobei die Wärmeaustauschflächen (12) mit einer Putzschicht (13) versehen sind, wobei die Wärmeaustauschflächen (12) sowie die Verbindungen zwischen den Wärmeaustauschflächen und der Grundfläche (4) von Wärmeübertragungselementen (6) gebildet werden, die je ein zusammenhängendes metallisches Flachmaterial (7) mit Durchtrittsöffnungen (8)umfassen, wobei das Flachmaterial (7) Kontaktflächen (10) zur Grundfläche (4), von der Grundfläche (4) wegführende Stegflächen (11) sowie die Wärmeaustauschflächen (12) umfasst und Falzbereiche (9) zwischen diesen Teilflächen des Flachmaterials (7) ausgebildet sind, **dadurch gekennzeichnet, dass** die Betondecke oder Wand als passiver oder aktiver Wärmespeicher dient, und die Kontaktflächen (10) der Wärmeübertragungselemente (6) mit einer wärmeleitenden Verbindungsschicht (5) mit einem Kleber oder Mörtel an der Grundfläche (4) befestigt sind.

2. Baustruktur (2) nach Anspruch 1, **dadurch gekennzeichnet, dass** die Wärmeaustauschflächen (12) einen im Wesentlichen konstanten Abstand zur Grundfläche (4) aufweisen, wobei der Abstand vorzugsweise in einem Bereich von 10mm bis 80mm, insbesondere von 25mm bis 45mm liegt.

3. Baustruktur (2) nach Anspruch 1 oder 2, **dadurch gekennzeichnet, dass** die Gesamtfläche der Kontaktflächen (10) mindestens einem Viertel, vorzugsweise mindestens der Hälfte, insbesondere mindestens zwei Dritteln, der Gesamtfläche der Wärmeaustauschflächen (12) entspricht.

4. Baustruktur (2) nach Anspruch 1 oder 3, **dadurch gekennzeichnet, dass** aufeinanderfolgende Wärmeaustauschflächen (12) im Wesentlichen direkt aneinander anschliessen oder vorzugsweise etwas beabstandet und insbesondere mit einem Abdeckelement (16) verbunden sind, wobei die Putzschicht (13, 14) im Wesentlichen zusammenhängend, insbesondere auch zwischen den Wärmeaustauschflächen (12), ausgebildet ist, so dass gegen einen Innenraum (3) hin eine zusammenhängende Putzfläche in Erscheinung tritt.

5. Baustruktur (2) nach einem der Ansprüche 1 bis 4, **dadurch gekennzeichnet, dass** das metallische Flachmaterial (7) nur bei den Wärmeaustauschflächen (12) Durchtrittsöffnungen (8) aufweist, wobei vorzugsweise der Lochflächenanteil an den Wärmeaustauschflächen (12) 2 bis 30%, insbesondere im Wesentlichen 25% beträgt und der Durchmesser der Durchtrittsöffnungen (8) im Bereich von 1 bis 6 mm, insbesondere bei im Wesentlichen 5mm liegt.

6. Baustruktur (2) nach einem der Ansprüche 1 bis 5, **dadurch gekennzeichnet, dass** das metallische Flachmaterial (7) aus Teilelementen (7a) zusammengestellt ist, welche beidseits parallel zu den Falzlinien (9) verlaufende Verbindungsbereiche (7b) umfassen, wobei die Verbindungsbereiche (7b) von miteinander verbundenen Teilelementen (7a) stabil und wärmeleitend miteinander verbunden sind.

7. Baustruktur (2) nach einem der Ansprüche 1 bis 6, **dadurch gekennzeichnet, dass** die Materialstärke des metallischen Flachmaterials (7) in einem Bereich von 0.2mm bis 3mm, vorzugsweise aber in einem Bereich von 0.5mm bis 1.8mm, insbesondere bei im Wesentlichen 1.5mm liegt.

8. Baustruktur (2) nach einem der Ansprüche 1 bis 7, **dadurch gekennzeichnet, dass** die Putzschicht (13, 14) die Wärmeaustauschflächen (12) gegen den Innenraum (3) hin überdeckt, luftdurchlässig ist und eine Mächtigkeit von maximal 10mm, vorzugsweise im Wesentlichen 5mm, insbesondere aber 3mm aufweist.

9. Baustruktur (2) nach einem der Ansprüche 1 bis 8, **dadurch gekennzeichnet, dass** zumindest in Teilbereichen zwischen der Ebene mit den Wärmeaustauschflächen (12) und der Grundfläche (4) Dämmmaterial (15), insb. Fasermaterial angeordnet ist.

10. Verfahren zum Herstellen einer Baustruktur (2) mit einem Raumbegrenzungsaufbau (1) an einer von einer Betondecke (2) oder Wand gebildeten Grundfläche (4) der Baustruktur (2) bei welchem Verfahren Wärmeaustauschflächen (12) von der Grundfläche (4) beabstandet angeordnet werden, wobei Verbindungen zwischen den Wärmeaustauschflächen (12) und der Grundfläche ausgebildet sind, die Wärmeaustauschflächen (12) sowie die Verbindungen zwischen den Wärmeaustauschflächen (12) und der Grundfläche (4) von Wärmeübertragungselementen (6) gebildet werden, die je ein zusammenhängendes metallisches Flachmaterial (7) mit Durchtrittsöffnungen (8)umfassen, wobei am metallischen Flachmaterial (7) die Wärmeaustauschflächen (12), Kontaktflächen (10) und Stegflächen (11) zwischen den Wärmeaustauschflächen (12) und den Kontaktflächen (10) über Falzbereiche (9) aneinander anschliessen und die Wärmeaustauschflächen (12) mit einer Putzschicht (13, 14) versehen werden, **dadurch gekennzeichnet, dass** eine wärmeleitende Verbindungsschicht (5) mit einem Kleber oder Mörtel zumindest auf Teilbereiche der Grundfläche (4) aufgebracht wird, über welche Verbindungsschicht (5) die Kontaktflächen (10) an der Grundfläche (4) befestigt werden, so dass die Stegflächen (11) von der Grundfläche (4) weg zu den Wärmeaustauschflächen (12) führen.

11. Verfahren nach Anspruch 10, **dadurch gekennzeichnet, dass** an der Grundfläche (4) aneinander anschliessend mehrere Wärmeübertragungselementen (6) mit Wärmeaustauschflächen (12), Kontaktflächen (10) und Stegflächen (11) angeordnet werden und anschliessend zumindest in Kontaktbereichen zwischen den Elementen vorzugsweise aber über die gesamte Fläche aller Wärmeaustauschflächen (12) eine Putzschicht (13, 14) aufgetragen wird.

12. Verfahren nach Anspruch 10 oder 11, **dadurch gekennzeichnet, dass** die Putzschicht (13, 14) die Wärmeaustauschflächen (12) gegen den Innenraum (3) hin überdeckend, luftdurchlässig und mit einer Mächtigkeit von maximal 10mm, vorzugsweise im Wesentlichen 5mm, insbesondere aber 3mm ausgebildet wird.

13. Verfahren nach einem der Ansprüche 10 bis 12, **dadurch gekennzeichnet, dass** zumindest in Teilbereichen zwischen der Ebene mit den Wärmeaustauschflächen (12) und der Grundfläche (4) Dämmmaterial (15), insb. Fasermaterial angeordnet wird.

## Claims

1. A building structure (2) comprising a space demarcation assembly (1) on a base area (4) of the building structure (2) formed by a concrete ceiling or wall against a building interior (3), the space demarcation assembly (1) comprising heat changes surfaces (12), which are spaced apart from the base area (4), and comprising connections, which are arranged between the heat exchange surfaces (12) and the base area (4), wherein the heat exchange surfaces (12) are provided with a plaster layer (13), wherein the heat exchange surfaces (12) as well as the connections between the heat exchange surfaces and the base area (4) are formed by heat transfer elements (6), which each comprise a cohering metallic flat material (7) comprising through openings (8), wherein the flat material (7) comprises contact surfaces (10) to the base area (4), web surfaces (11) leading away from the base area (4), as well as the heat exchange surfaces (12), and folding regions (9) are embodied between these subsurfaces of the flat material (7), **characterised in that** the concrete ceiling or wall serves as passive or active heat store, and the contact surfaces (10) of the heat transfer elements (6) are fastened to the base area (4) by means of a heat-conductive connecting layer (5) by means of an adhesive or mortar.

2. The building structure (2) according to claim 1, **characterised in that** the heat exchange surfaces (12) have an essentially constant distance to the base area (4), wherein the distance preferably lies in a range of between 10 mm and 80 mm, in particular between 25 mm and 45 mm.

3. The building structure (2) according to claim 1 or 2, **characterised in that** the total surface area of the contact surfaces (10) corresponds at least to one-fourth, preferably at least to half, in particular at least two two-thirds, of the total surface area of the heat exchange surfaces (12).

4. The building structure (2) according to claim 1 or 3, **characterised in that** consecutive heat exchange surfaces (12) essentially connect directly to one another or are preferably slightly spaced apart and are in particular connected to a cover element (16), wherein the plaster layer (13, 14) is essentially embodied to be continuous, in particular also between the heat exchange surfaces (12), so that a continuous plaster layer appears against an interior (3).

5. The building structure (2) according to any one of claims 1 to 4, **characterised in that** the metallic flat material (7) only has through openings (8) at the heat exchange surfaces (12), wherein the surface area percentage of holes on the heat exchange surfaces (12) is preferably between 2 and 30%, in particular essentially 25%, and the diameter of the through openings (8) lies in the range of between 1 and 6 mm, in particular essentially at 5 mm.

6. The building structure (2) according to any one of claims 1 to 5, **characterised in that** the metallic flat material (7) is composed of subelements (7a), which comprise connecting regions (7b) running parallel to the folding lines (9), wherein the connecting regions (7b) are connected to one another in a stable and heat-conducting manner by means of subelements (7a), which are connected to one another.

7. The building structure (2) according to any one of claims 1 to 6, **characterised in that** the material thickness of the metallic flat material (7) lies in a range of between 0.2 mm and 3 mm, but preferably in a range of between 0.5 mm and 1.8 mm, in particular at essentially 1.5 mm.

8. The building structure (2) according to any one of claims 1 to 7, **characterised in that** the plaster layer (13, 14) covers the heat exchange surfaces (12) against the interior (3), is air-permeable, and has a thickness of maximally 10 mm, preferably essentially 5 mm, but in particular 3 mm.

9. The building structure (2) according to any one of claims 1 to 8, **characterised in that** insulating material (15), in particular fibre material, is arranged at least in subregions between the plane with the heat exchange surfaces (12) and the base area (4).

10. A method for producing a building structure (2) comprising a space demarcation assembly (1) on a base area (4) of the building structure (2) formed by a concrete ceiling (2) or wall, in the case of which method heat exchange surfaces (12) are arranged spaced apart from the base area (4), wherein connections between the heat exchange surfaces (12) and the base area are embodied, the heat exchange surfaces (12) as well as the connections between the heat exchange surfaces (12) and the base area (4) are formed by heat transfer elements (6), which each comprise a cohering metallic flat material (7) comprising through openings (8), wherein the heat exchange surfaces (12), contact surfaces (10), and web surfaces (11) between the heat exchange surfaces (12) and the contact surfaces (10) on the metallic flat material (7) connect to one another via folding regions (9), and the heat exchange surfaces (12) are provided with a plaster layer (13, 14), **characterised in that** a heat-conducting connecting layer (5) is applied by means of an adhesive or mortar at least to subregions of the base area (4), via which connecting layer (5) the contact surfaces (10) are fastened to the base area (4), so that the web surfaces (11) lead away from the base area (4) to the heat exchange surfaces (12).

11. The method according to claim 10, **characterised in that** a plurality of heat transfer elements (6) comprising heat exchange surfaces (12), contact surfaces (10), and web surfaces (11) are arranged so as to connect to one another at the base area (4), and a plaster layer (13, 14) is subsequently applied at least in contact regions between the elements, but preferably over the entire surface area of all heat exchange surfaces (12).

12. The method according to claim 10 or 11, **characterised in that** the plaster layer (13, 14) is embodied so as to cover the heat exchange surfaces (12) against the interior (3), so as to be air-permeable, and comprising a thickness of maximally 10 mm, preferably essentially 5 mm, but in particular 3 mm.

13. The method according to any one of claims 10 to 12, **characterised in that** insulating material (15), in particular fibre material, is arranged at least in subregions between the plane with the heat exchange surfaces (12) and the base area (4) .

## Revendications

1. Structure de construction (2) comprenant un assemblage de limitation d'espace (1) sur une face de base (4) de la structure de construction (2) formée d'un plafond en béton ou d'une paroi contre un espace interne de bâtiment (3) avec des faces d'échange de chaleur (12) qui sont écartées de la face de base (4) et avec des connexions qui sont disposées entre les faces d'échange de chaleur (12) et la face de base (4), dans laquelle les faces d'échange de chaleur (12) sont pourvues d'une couche d'enduit (13), dans laquelle les faces d'échange de chaleur (12) ainsi que les connexions sont formées entre les faces d'échange de chaleur et la face de base (4) par des éléments de transmission de chaleur (6) qui comprennent chacun un matériau plat métallique connexe (7) avec des ouvertures de passage (8), dans laquelle le matériau plat (7) comprend des faces de contact (10) par rapport à la face de base (4), des faces d'étai (11) écartées de la face de base (4) ainsi que les faces d'échange de chaleur (12) et des régions de pli (9) sont réalisées entre ces faces partielles du matériau plat (7), **caractérisée en ce que** le plafond en béton ou la paroi sert d'accumulateur de chaleur passif ou actif, et les faces de contact (10) des éléments de transmission de chaleur (6) sont fixées à la face de base (4) avec une couche de connexion thermoconductrice (5) avec un adhésif ou mortier.

2. Structure de construction (2) selon la revendication 1, **caractérisée en ce que** les faces d'échange de chaleur (12) présentent un écart essentiellement constant par rapport à la face de base (4), dans laquelle l'écart se situe de préférence dans une plage de 10 mm à 80 mm, notamment de 25 mm à 45 mm.

3. Structure de construction (2) selon la revendication 1 ou 2, **caractérisée en ce que** la surface totale des faces de contact (10) correspond à au moins un quart, de préférence au moins la moitié, notamment au moins deux tiers, de la surface totale des faces d'échange de chaleur (12).

4. Structure de construction (2) selon la revendication 1 ou 3, **caractérisée en ce que** des faces d'échange de chaleur successives (12) se rattachent essentiellement directement l'une à l'autre ou sont de préférence connectées de manière quelque peu écartée et notamment avec un élément de recouvrement (16), dans laquelle la couche d'enduit (13, 14) est réalisée de manière essentiellement connexe, notamment également entre les faces d'échange de chaleur (12) de sorte qu'une face d'enduit connexe fait son apparition vers un espace interne (3).

5. Structure de construction (2) selon une des revendications 1 à 4, **caractérisée en ce que** le matériau plat métallique (7) ne présente des ouvertures de passage (8) qu'au niveau des faces d'échange de chaleur (12), dans laquelle la proportion de surface de trou au niveau des faces d'échange de chaleur (12) se monte de préférence à 2 à 30 %, notamment essentiellement 25 % et le diamètre des ouvertures de passage (8) se situe dans la plage de 1 à 6 mm, notamment à essentiellement 5 mm.

6. Structure de construction (2) selon une des revendications 1 à 5, **caractérisée en ce que** le matériau plat métallique (7) est composé d'éléments partiels (7a) qui comprennent des régions de connexion (7b) s'étendant des deux côtés parallèlement aux lignes de pli (9), dans laquelle les régions de connexion (7b) d'éléments partiels (7a) connectés les uns aux autres sont connectées les unes aux autres de manière stable et thermoconductrice.

7. Structure de construction (2) selon une des revendications 1 à 6, **caractérisée en ce que** l'épaisseur de matériau du matériau plat métallique (7) se situe dans une plage de 0,2 mm à 3 mm, de préférence toutefois dans une plage de 0,5 mm à 1,8 mm, notamment à essentiellement 1,5 mm.

8. Structure de construction (2) selon une des revendications 1 à 7, **caractérisée en ce que** la couche d'enduit (13, 14) recouvre les faces d'échange de chaleur (12) vers l'espace interne (3), est perméable à l'air et présente une épaisseur de 10 mm maximum, de préférence essentiellement 5 mm, notamment toutefois 3 mm.

9. Structure de construction (2) selon une des revendications 1 à 8, **caractérisée en ce que** du matériau isolant (15), notamment matériau fibreux, est disposé au moins dans des régions partielles entre le plan avec les faces d'échange de chaleur (12) et la face de base (4).

10. Procédé de fabrication d'une structure de construction (2) avec un assemblage de limitation d'espace (1) sur une face de base (4) de la structure de construction (2) formée d'un plafond en béton (2) ou d'une paroi, lors duquel procédé des faces d'échange de chaleur (12) sont disposées de manière écartée de la face de base (4), dans lequel des connexions sont réalisées entre les faces d'échange de chaleur (12) et la face de base, les faces d'échange de chaleur (12) ainsi que les connexions sont formées entre les faces d'échange de chaleur (12) et la face de base (4) par des éléments de transmission de chaleur (6) qui comprennent chacun un matériau plat métallique connexe (7) avec des ouvertures de passage (8), dans lequel les faces d'échange de chaleur (12), faces de contact (10) et faces d'étai (11) entre les faces d'échange de chaleur (12) et les faces de contact (10) se rattachent les unes aux autres sur le matériau plat métallique (7) par le biais de régions de pli (9) et les faces d'échange de chaleur (12) sont pourvues d'une couche d'enduit (13, 14), **caractérisé en ce qu'**une couche de connexion thermoconductrice (5) est appliquée avec un adhésif ou mortier au moins sur des régions partielles de la face de base (4), par le biais de laquelle couche de connexion (5) les faces de contact (10) sont fixées à la face de base (4) de sorte que les faces d'étai (11) conduisent aux faces d'échange de chaleur (12) à l'écart de la face de base (4).

11. Procédé selon la revendication 10, **caractérisé en ce que** plusieurs éléments de transmission de chaleur (6) avec des faces d'échange de chaleur (12), faces de contact (10) et faces d'étai (11) sont disposés sur la face de base (4) de manière adjacente les uns aux autres et une couche d'enduit (13, 14) est ensuite appliquée au moins dans des régions de contact entre les éléments, de préférence toutefois sur la surface entière de toutes les faces d'échange de chaleur (12).

12. Procédé selon la revendication 10 ou 11, **caractérisé en ce que** la couche d'enduit (13, 14) est réalisée de manière à recouvrir les faces d'échange de chaleur (12) vers l'espace interne (3), perméable à l'air et avec une épaisseur de 10 mm maximum, de préférence essentiellement 5 mm, notamment toutefois 3 mm.

13. Procédé selon une des revendications 10 à 12, **caractérisé en ce que** du matériau isolant (15), notamment matériau fibreux, est disposé au moins dans des régions partielles entre le plan avec les faces d'échange de chaleur (12) et la face de base (4).
